# FASCICULE DE BREVET EUROPEEN

(11) **EP 1 489 816 B1**
(45) Date de publication et mention de la délivrance du brevet: **30.04.2014**
(21) Numéro de dépôt: 04291419.2
(22) Date de dépôt: 07.06.2004
(51) Int. Cl.: H04W 12/06, H04W 88/02

(54) **Commande d'un chargement de données depuis un terminal mobile dans un équipement électronique**
Steuerrung für Datenherunterladung von einem mobilen Endgerät zu einer elektronischen Anordnung
Data download control from a mobile terminal into an electronic equipment

(30) Priorité: 16.06.2003 FR 0307190
(43) Date de publication de la demande: 22.12.2004
(73) Titulaire: Orange, 75015 Paris (FR)
(72) Inventeur: Michon, Philippe, 14760 Bretteville sur Odon (FR)
(74) Mandataire: Regimbeau

(56) Documents cités:
- WO-A-01/93555
- GB-A- 2 373 614
- US-A- 5 553 314
- US-A- 5 630 159

## Description

La présente invention concerne un procédé pour commander par un terminal radiotéléphonique mobile d'usager un chargement de données d'usager dans un équipement électronique, par exemple un téléchargement de données d'usager depuis un serveur. L'équipement électronique est par exemple un ordinateur de bord dans un véhicule.

Selon la demande de brevet GB 2373614, un système de sécurité de véhicule utilise un dispositif mobile tel qu'un ordinateur personnel portable ou un assistant numérique personnel (PDA) relié à l'ordinateur de bord du véhicule à travers un support adaptateur du dispositif mobile installé dans le véhicule et une liaison de données. Des identités du véhicule et du dispositif mobile sont transmises par le dispositif mobile à un serveur d'authentification notamment via le réseau de radiotéléphonie cellulaire correspondant. Le serveur d'authentification vérifie que le dispositif mobile est autorisé à utiliser ce véhicule lorsqu'il y a correspondance entre les identités dans une table de base de données. Le dispositif mobile ayant été ainsi authentifié, il autorise l'ordinateur de bord à démarrer le véhicule.

L'usager du dispositif mobile a obligatoirement accès au préalable au véhicule puisque le dispositif mobile est relié à l'ordinateur de bord par une liaison physique. Ce système de sécurité ne permet pas à l'usager du dispositif mobile d'imposer une configuration déterminée de réglages dans le véhicule, par exemple relatifs au volant, aux sièges, aux rétroviseurs, ou encore au poste radio.

Le document US-A-5553314 propose de télécharger une application logicielle depuis un dispositif de configuration dans un terminal radiotéléphonique mobile.

L'objectif de la présente invention est de commander par un terminal mobile le chargement de données d'usager de manière sécurisée dans un équipement électronique afin d'accéder sélectivement à des fonctions de l'équipement électronique et d'activer ces fonctions selon les données d'usager.

Pour atteindre cet objectif, un procédé pour commander par un terminal radiotéléphonique mobile d'usager un chargement de premières et deuxièmes données personnelles à l'usager respectivement depuis des premier et deuxième moyens de mémoire vers un équipement électronique, est caractérisé en ce qu'il comprend les étapes de :
appeler à travers une liaison radio un moyen depuis le terminal afin de transmettre un identificateur de l'usager et un identificateur de l'équipement au moyen d'authentification,
vérifier une correspondance de l'identificateur de l'usager et de l'identificateur de l'équipement dans le moyen d'authentification, et
charger les premières et deuxièmes données personnelles à l'usager depuis les premier et deuxième moyens de mémoire dans l'équipement sous la commande du moyen d'authentification lorsque l'identificateur d'usager est en correspondance avec l'identificateur d'équipement.

Selon une première réalisation, le premier moyen de mémoire et le moyen d'authentification sont inclus dans un premier serveur relié par un réseau de télécommunications au terminal mobile d'usager et à l'équipement électronique. Le premier serveur après avoir vérifié la correspondance entre les identificateurs télécharge et active les premières données personnelles d'usager depuis le premier serveur et les deuxièmes données d'usager depuis le deuxième moyen de mémoire dans l'équipement à travers le réseau de télécommunications.

Selon une deuxième réalisation, le premier moyen de mémoire est inclus dans l'équipement et le moyen d'authentification est inclus dans un premier serveur relié par un réseau de télécommunications au terminal mobile d'usager. Le premier serveur après avoir vérifié la correspondance entre les identificateurs active les premières et deuxièmes données d'usager dans l'équipement à travers le réseau de télécommunications.

Selon une troisième réalisation, le premier moyen de mémoire est inclus dans un premier serveur relié par un réseau de télécommunications au terminal mobile d'usager et le moyen d'authentification est inclus dans l'équipement. L'équipement après avoir été appelé par le terminal et vérifié la correspondance entre l'identificateur d'usager et l'identificateur d'équipement transmis télécharge et active dans l'équipement les premières et deuxièmes données d'usager lues respectivement dans le premier serveur et le deuxième moyen de mémoire.

Selon une quatrième réalisation, le premier moyen de mémoire et le moyen d'authentification sont inclus dans l'équipement relié par au moins une liaison sans fil au terminal mobile d'usager. L'équipement, après avoir été appelé par le terminal et avoir vérifié la correspondance entre l'identificateur d'usager et l'identificateur d'équipement transmis, charge les deuxièmes données d'usager et active les premières et deuxièmes données d'usager.

D'autres caractéristiques et avantages de la présente invention apparaîtront plus clairement à la lecture de la description suivante de plusieurs réalisations préférés de l'invention, à titre d'exemples non limitatifs, en référence aux dessins annexés correspondants dans lesquels :
- la figure 1 est un bloc-diagramme schématique d'un système de commande de chargement de données selon une première réalisation pour mettre en oeuvre l'invention ;
- la figure 2 est un algorithme du procédé pour commander par un terminal mobile un chargement de données d'usager dans un équipement électronique selon la première réalisation ;
- la figure 3 est un bloc-diagramme schématique d'un système de commande de chargement de données selon une deuxième réalisation de l'invention ;
- la figure 4 est un bloc-diagramme schématique d'un système de commande de chargement de données selon une troisième réalisation de l'invention ; et
- la figure 5 est un bloc-diagramme schématique d'un système de commande de chargement de données selon une quatrième réalisation de l'invention.

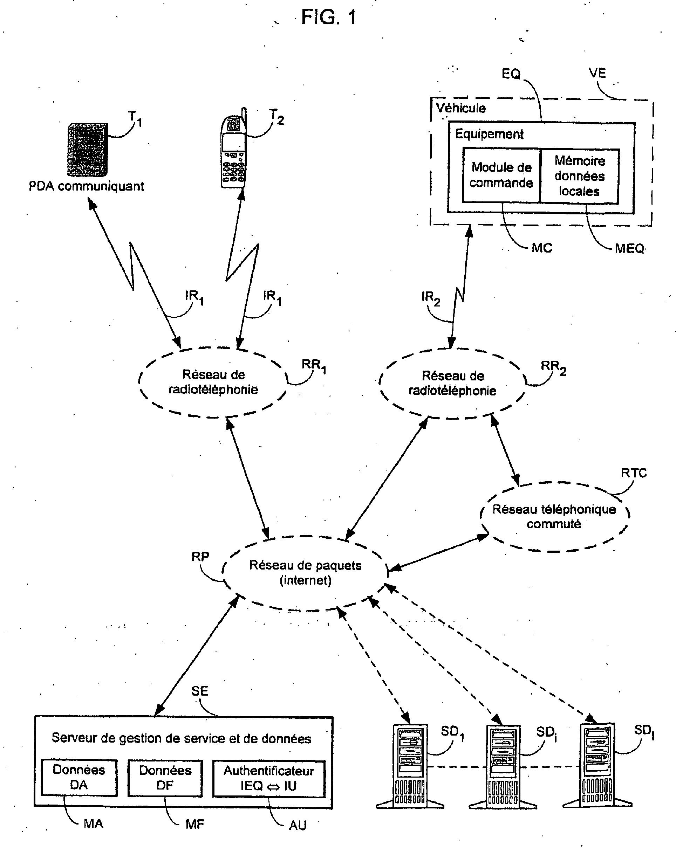

Un système de commande de chargement de données selon une première réalisation de l'invention comprend principalement, en référence à la figure 1, au moins un terminal mobile radiotéléphonique T inclus dans un premier réseau de radiotéléphonie cellulaire RR₁, un équipement électronique EQ inclus dans un deuxième réseau de radiotéléphonie cellulaire RR₂, et un serveur de gestion de service et de données SE.

Les réseaux de radiotéléphonie cellulaires numériques RR₁ et RR₂ sont de type GSM, auquel référence sera faite dans la suite à titre d'exemple, ou GSM-GPRS, ou UMTS par exemple, et peuvent être confondus.

Le terminal T est relié par une interface radio IR₁ à une station de base dans le réseau RR₁. A titre d'exemple, deux types de terminal mobile T désignés par T₁ et T₂ sont illustrés à la figure 1. Le terminal T₁ est un outil ou dispositif mobile de télécommunications personnel tel qu'un assistant numérique personnel communicant PDA (Personal Digital Assistant). Le terminal T₂ est un radiotéléphone mobile comprenant classiquement un module à microprocesseur amovible, dite carte à puce SIM, et un équipement mobile, comme dans le terminal T₁.

L'équipement électronique EQ comprend au moins un circuit émetteur-récepteur radiotéléphonique, en tant que terminal mobile, relié par une interface radio IR₂ à une station de base du réseau RR₂ et un module de commande MC tel qu'un ordinateur de bord dans un véhicule VE ou un dispositif domotique dans une maison. Le module de commande de l'équipement électronique comprend au moins une mémoire pour données locales MEQ.

Le serveur de gestion de service et de données SE est lié aux réseaux de radiotéléphone cellulaire RR₁ et RR₂ par un réseau de paquets RP de type internet ou autres. Le serveur SE comprend deux mémoires MA et MF et un authentificateur AU selon la première réalisation. La première mémoire MA mémorise des données d'accès DA personnelles à des usagers qui désignent des fonctions ou actions gérées par l'équipement EQ en fonction de données de réglage de fonction personnelles DF lues dans la deuxième mémoire MF. Par exemple, les données d'accès DA désignent au moins une fonction relative à une ouverture des portières du véhicule VE et une ou plusieurs fonctions relatives à un siège, un rétroviseur, un volant, une limitation de vitesse et un poste radio dans le véhicule VE, et les données de réglage d'une fonction DF contiennent chacune un ou plusieurs paramètres relatifs à la fonction, comme par exemple une durée d'autorisation d'accès pendant une période donnée, la hauteur et le recul du siège, l'inclinaison du rétroviseur, la hauteur et l'inclinaison du volant, une vitesse maximale, et le volume dans le poste radio.

Des données d'accès DA définissent préalablement des droits d'accès d'un usager de terminal à un équipement électronique EQ. Ces droits d'accès peuvent être gérés par des entreprises ayant souscrit un service selon le procédé de l'invention auprès d'un fournisseur et proposant des applications aux usagers, comme une entreprise de location de véhicules qui paramètre les droits d'accès de chacun de ses clients-usagers en fonction d'un contrat de location souscrit au préalable par l'usager.

Le moyen d'authentification AU comprend essentiellement une table de correspondance entre des identificateurs d'usager IU et des identificateurs d'équipement IEQ. Un identificateur d'usager IU peut correspondre à plusieurs identificateurs d'équipements et sert à adresser les mémoires MA et MF pour y lire les premières données DA et les deuxièmes données DF personnelles à l'usager désignées par l'identificateur IU.

Le serveur de gestion gère également les abonnements des usagers à un service mettant en oeuvre le procédé selon l'invention.

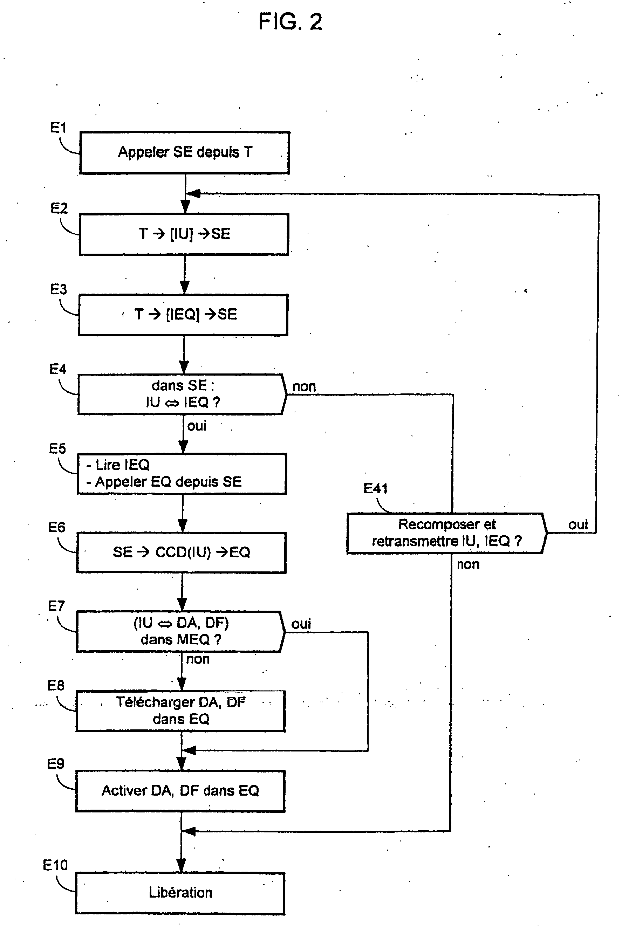

Un algorithme du procédé de l'invention mis en oeuvre dans le système de commande selon la première réalisation comprend des étapes E1 à E10 montrées à la figure 2.

A l'étape E1, le terminal T appelle classiquement le serveur SE via les réseaux RR₁ et/ou RTC et RP. La partie fixe du réseau de radiotéléphonie RR₁ authentifie l'usager selon les données d'identité d'usager contenues dans la carte SIM incluse dans le terminal T et établit une communication entre le terminal et le serveur SE. A l'étape E2, l'usager du terminal d'usager T est invité par le serveur SE à transmettre l'identificatéur IU de l'usager de préférence accompagné d'un mot de passe. Après validation de l'identificateur IU et du mot de passe, le serveur SE invite l'usager du terminal à transmettre un identificateur IEQ le l'équipement électronique EQ à l'étape E3. Par exemple, l'usager est proche du véhicule VE et l'identificateur IEQ est le numéro d'immatriculation du véhicule VE lu sur une plaque minéralogique de celui-ci, ou un numéro spécifique au loueur du véhicule et est composé au clavier du terminal T avec le mot de passe, puis transmis du terminal T au serveur SE.

A l'étape E4, le serveur SE vérifie que les identificateurs transmis IU et IEQ correspondent dans la table du moyen d'authentification AU.

S'il n'y a aucune correspondance entre les identificateurs transmis IU et IEQ, l'usager n'est pas autorisé à accéder à l'équipement électronique EQ. Les données personnelles DA et DF de l'usager ne sont pas lues dans les mémoires MA et MF. Les portières du véhicule VE demeurent fermées. Le serveur de gestion SE peut inviter l'usager à recomposer et retransmettre les identificateurs IU et IEQ à une étape intermédiaire E41. Après par exemple deux ou trois exécutions d'étapes intermédiaires E41, ou directement après l'étape E4, le serveur décide de libérer la communication avec le terminal T à une étape finale E10.

Si les identificateurs transmis IU et IEQ correspondent dans la table du moyen d'authentification AU, le moyen d'authentification lit dans la table l'adresse IEQ de l'équipement électronique EQ afin que le serveur SE appelle l'équipement à travers les réseaux RP et/ou RTC et RR₂, à l'étape E5. Après l'établissement d'une communication entre le serveur SE et l'équipement EQ, le serveur SE transmet une commande de chargement de données CCD incluant l'identificateur d'usager IU, lors de l'étape E6. Le module de commande MC dans l'équipement EQ vérifie que dans la mémoire de données locale MEQ, l'identificateur IU y est déjà inscrit en correspondance avec des données d'usager, en réponse à la commande de chargement de données CCD, à l'étape E7 ; dans ce cas, il faut néanmoins vérifier que les données de l'utilisateur n'ont pas changé.

Si aucune donnée d'usager n'est contenue en correspondance avec l'identificateur transmis IU dans la mémoire MEQ, l'équipement EQ adresse un message au serveur de gestion SE afin de lire les données d'usager DA et DF correspondant à l'identificateur d'usager IU dans les mémoires MA et MF et les télécharger dans la mémoire de données locale MEQ de l'équipement EQ.

Après l'étape de téléchargement de données d'usager E8, le message contenant les données d'usager DA et DF transmis par le serveur SE à l'équipement EQ à travers les réseaux de télécommunications RP, RTC et RR₂ est interprété par le module de commande MC comme une commande de l'activation des données d'usager transmises DA et DF par le serveur SE à l'étape E9 afin d'une part que ces données soient écrites dans la mémoire de données locale MEQ en correspondance avec l'identificateur d'usager IU, d'autre part soient interprétées par le module de commande MC pour exécuter les fonctions désignées par les données DA, particulièrement en premier l'ouverture des portières du véhicule VE, en fonction des paramètres de ces fonctions précités dans les deuxièmes données d'usager DF. De même, lorsque les données d'usager DA et DF sont déjà mémorisées dans les mémoires MEQ de l'équipement EQ à l'étape E7, le serveur SE commande l'activation des données lues dans la mémoire MEQ en correspondance avec l'identificateur d'usager IU, à l'étape E9.

Puis à l'étape E10, l'équipement EQ libère la communication avec le serveur SE, et le serveur SE transmet un message au terminal T invitant l'usager à ouvrir les portières du véhicule VE et à entrer dans celui-ci, puis libère la communication avec le terminal T. L'usager qui se trouve à proximité du véhicule VE, peut alors pénétrer dans celui-ci et s'asseoir sur un siège de conducteur réglé ergoniquement selon ses données personnelles DF, regarder dans les rétroviseurs convenablement réglés et écouter une station radio avec un volume déterminé par exemple.

L'invention améliore ainsi la sécurité et le confort de l'usager du véhicule tout en permettant à une entreprise de location de véhicules de programmer et de gérer l'accès aux véhicules de sa flotte de véhicules.

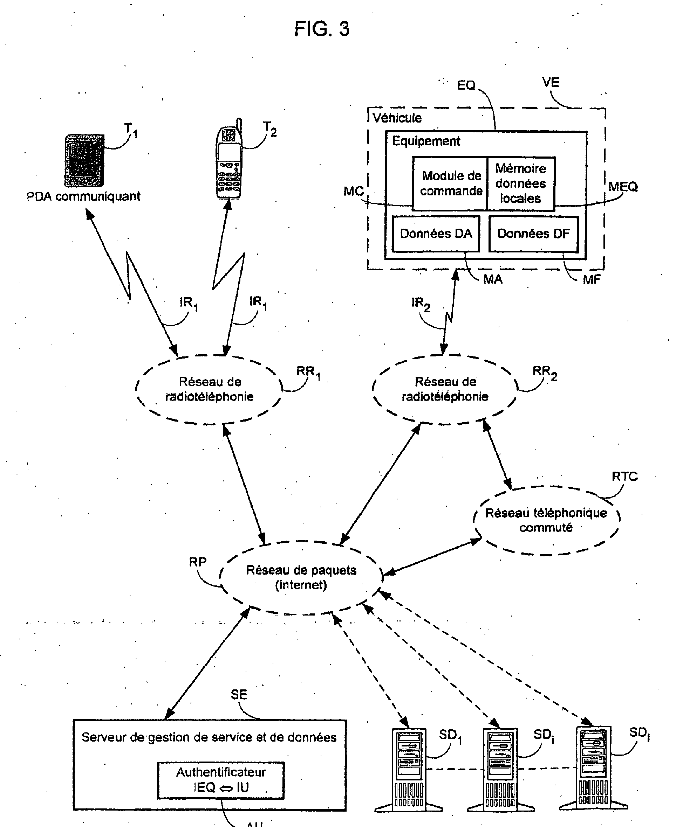

Selon une deuxième réalisation du système de commande de chargement de données montrée à la figure 3, les mémoires de données d'usager MA et MF sont incluses dans l'équipement EQ, et non pas dans le serveur de données SE qui inclut encore le moyen d'authentification AU. Pour cette deuxième réalisation, les données DA et DF de l'usager utilisant le terminal T sont enregistrées dans les mémoires MA et MF dans l'équipement EQ préalablement à l'appel du serveur SE par le terminal T, par exemple lors de la souscription de l'usager aux services selon le procédé de l'invention, en l'occurrence lors de la signature du contrat de location du véhicule VE. Dans cette deuxième réalisation, le serveur de gestion de service et de données SE après avoir vérifié la correspondance entre les identificateurs IU et IEQ à l'étape E4 appelle l'équipement EQ et lui transmet une commande de chargement de données CCD aux étapes E5 et E6 afin d'activer les premières et deuxièmes données d'usager DA et DF dans l'équipement EQ à travers les réseaux de télécommunications RP, RTC et RR₂, à l'étape E9. Dans cette réalisation, les étapes E7 et E8 sont supprimées.

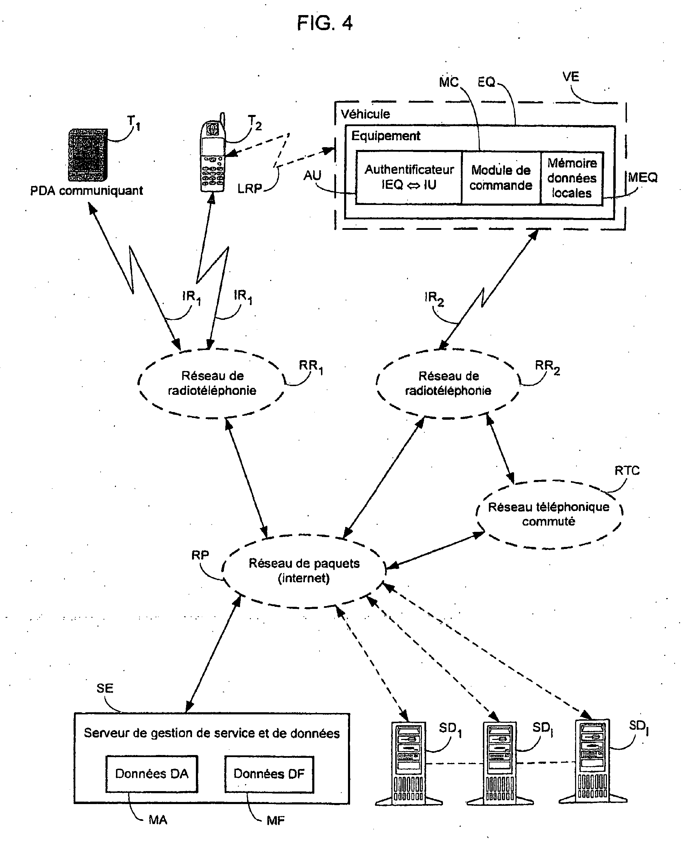

Selon une troisième réalisation du système de commande de chargement de données montrée à la figure 4, le module de commande MC de l'équipement EQ inclut le moyen d'authentification AU qui n'est plus implémenté dans le serveur de gestion de service et de données SE qui inclut encore les mémoires de données d'usager MA et MF.

Relativement à la figure 2, le procédé de l'invention diffère dans cette troisième réalisation en ce que le terminal T appelle l'équipement EQ et non le serveur SE à l'étape E1 afin de transmettre l'identificateur d'usager IU et l'identificateur d'équipement IEQ à l'équipement EQ aux étapes E2 et E3. Le moyen d'authentification AU dans l'équipement EQ vérifie ensuite la correspondance entre l'identificateur d'usager transmis IU et l'identificateur d'équipement transmis IEQ à l'étape E4 afin qu'en cas de correspondance, l'équipement EQ appelle le serveur SE, au lieu d'être appelé par celui-ci, à l'étape E5. Les étapes E6 et E7 sont supprimées et l'équipement EQ télécharge et active les premières et deuxièmes données d'usager DA et DF lues respectivement dans les mémoires de données DA et DF dans le serveur SE, à travers les réseaux de télécommunications RP, RTC et RR₂ aux étapes E8 et E9.

Selon la description ci-dessus de la troisième réalisation, la communication établie entre le terminal T et l'équipement EQ est réalisée classiquement à travers au moins les réseaux de radiotéléphonie RR₁ et RR₂. Selon une variante montrée en traits pointillés à la figure 4, la liaison établie entre le terminal T et l'équipement EQ lors de l'étape d'appel E1 est une liaison radioélectrique de proximité LRP de type Bluetooth ou selon la norme WiFi 802.11b.

Selon une autre variante de la troisième réalisations, analogue à une variante déjà évoquée pour la première réalisation, la mémoire de données locale MEQ dans l'équipement EQ a déjà mémorisé les données d'usager DA et DF par exemple lors de la souscription de l'usager au service de l'invention à l'initiative du loueur du véhicule VE, ou lors d'une première utilisation préalable du véhicule VE par l'usager. Dans cette variante, à la place des étapes E6 et E7, le module de commande MC de l'équipement EQ vérifie si les données d'usager DA et DF sont déjà stockées en correspondance avec l'identificateur d'usager IU dans ..la mémoire de données locales MEQ avant de procéder à tout téléchargement de données d'usager depuis le serveur SE. Si les données DA et DF sont déjà présentes dans la mémoire MEQ, l'équipement EQ commande alors directement l'activation des données DA et DF ; dans ce cas, il faut néanmoins vérifier que les données de l'utilisateur n'ont pas changé,

Dans les première, deuxième et troisième réalisations montrées aux figures 1, 3 et 4, la deuxième mémoire de données d'usager MF n'est pas nécessairement incluse dans le serveur SE ou dans l'équipement électronique EQ.

Selon une première variante, la deuxième mémoire de données d'usager MF est incluse dans un serveur de données ou répartie dans plusieurs serveurs de données SD₁ à SD_{I} qui sont reliés aux réseaux de paquets RP, comme montré par des liaisons en traits pointillés aux figures 1, 3 et 4. Dans cette variante, la table du moyen d'authentification AU associe à l'identificateur d'usager IU une adresse du serveur SDᵢ contenant au moins partiellement la mémoire de données d'usager MF, en l'occurrence au moins les données DF personnelles à l'usager du terminal T. Pour cette variante, le téléchargement des données d'usager DF à l'étape E8 est effectué d'abord en transférant les données d'usager DF du serveur de données SDᵢ vers le serveur SE à la demande du serveur SE, puis en téléchargeant les données DF avec les données DA depuis le serveur SE dans l'équipement EQ pour les première et troisième réalisations, ou en ne téléchargeant que les données DF dans l'équipement EQ pour la deuxième réalisation.

Selon une deuxième variante, la mémoire de données d'usager MF est répartie dans les terminaux d'usager. En l'occurrence, le terminal T inclut les deuxièmes données DF de l'usager utilisant le terminal T, ce qui facilite toute modification de paramètre de réglage par l'usager en local, sans établir une communication avec un serveur SDᵢ ou SE, voire avec l'équipement EQ. Dans cette deuxième variante, le serveur SE télécharge les deuxièmes données d'usager DF depuis le terminal à l'étape E8 pour les première et troisième réalisations afin de les retransmettre avec les premières données d'usager DA lues dans la mémoire MA incluse dans le serveur SE à l'équipement EQ, lorsque l'identificateur d'usager IU est en correspondance avec l'identificatéur d'équipement IEQ. Pour la deuxième réalisation montrée à la figuré 3, une étape de téléchargement partielle EQ est exécutée par le serveur SE qui télécharge les données d'usager DF depuis le terminal T afin de les retransmettre à l'équipement EQ lorsque les identificateur IU et IEQ correspondent. Dans cette deuxième variante, les deuxièmes données d'usager DF peuvent être également téléchargées directement par l'équipement électronique EQ depuis le terminal T, lorsque l'équipement et le terminal sont reliés par la liaison radio de proximité LRP.

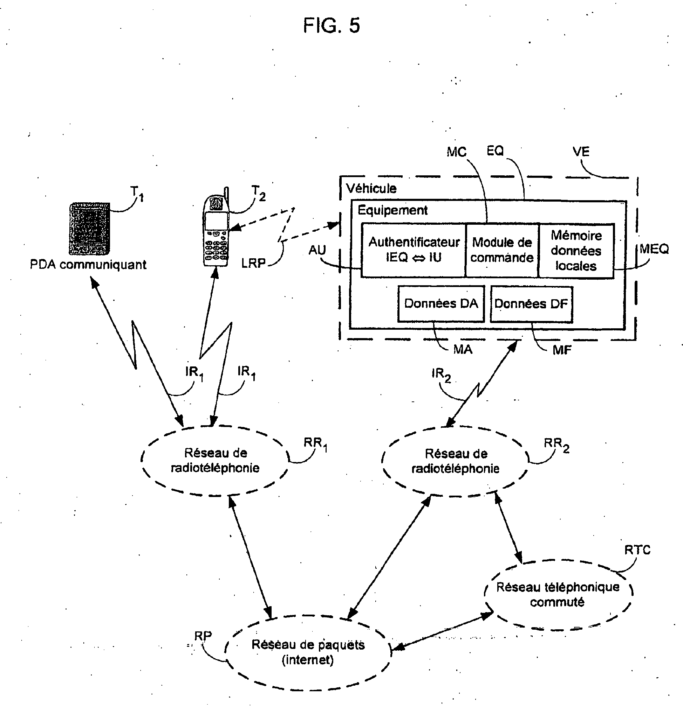

Selon une quatrième réalisation du système de commande de chargement de données montré à la figure 5, aucun serveur SE où SDᵢ n'est utilisé. Le moyen d'authentification AU est implémenté dans le module de commande MC de l'équipement et au moins la première mémoire de données d'usager MA est incluse dans l'équipement EQ, La deuxième mémoire d'usager MF est également incluse dans l'équipement EQ selon une première variante. L'équipement EQ est relié par au moins une liaison sans fil au terminal mobile d'usager T, c'est-à-dire par les interfaces radio IR₁ et IR₂ des réseaux de radiotéléphonie cellulaire RR₁ et RR₂, ou par la liaison radio de proximité LRP.

Dans cette quatrième réalisation, tout se passe selon le déroulement de l'algorithme montré à la figure 2 comme si le serveur SE était remplacé par l'équipement EQ, et les étapes E5 et E6 étaient supprimées. Ainsi, après que l'équipement EQ ait été appelé par le terminal T à l'étape E1 et ait reçu les identificateurs IU et IEQ transmis par le terminal T aux étapes E2 et E3 et après que l'équipement EQ ait vérifié la correspondance entre l'identificateur d'usager IU et l'identificateur d'équipement IEQ transmis, l'équipement EQ charge les première et deuxième données d'usager DA et DF lues dans les mémoires MA et MF afin de les activer aux étapes E8 et E9.

En variante, la deuxième mémoire de données d'usager MF est incluse dans le terminal T au lieu d'être incluse dans l'équipement EQ. L'équipement EQ télécharge à l'étapé E8 les données d'usager DF depuis le terminal T, puis active à l'étape E9 les premières données d'usager DA lues dans la mémoire MA incluses dans l'équipement EQ et les deuxièmes données d'usager DF téléchargées lorsque l'identificateur d'usager IU est en correspondance avec l'identificateur d'équipement IEQ.

L'invention n'est pas limitée à un équipement électronique du type ordinateur de bord installé dans un véhicule. L'équipement électronique peut être par exemple une centrale domotique installée dans l'appartement ou le pavillon de l'usager. L'activation des premières données d'usager DA sont relatives au moins à une ouverture de porte d'entrée et/ou de porte de garage et de préférence également à des fermetures de volets, à des commandes et des heures de fonctionnement d'une chaudière, à des commandes et des heures d'activation d'une centrale d'alarme, etc.

## Revendications

1. Procédé pour commander par un terminal radiotéléphonique mobile d'usager (T) un chargement de premières et deuxièmes données (DA, D_{F}) personnelles à l'usager respectivement depuis des premier et deuxième moyens de mémoire (MA, MF) vers un équipement électronique (EQ), **caractérisé en ce qu'**il comprend les étapes de :
appeler (E1) à travers une liaison radio (IR₁, IR₂, LRP) un moyen d'authentification (AU) depuis le terminal (T) afin de transmettre (E2, E3) un identificateur (IU) de l'usager et un identificateur (IEQ) de l'équipement (EQ) au moyen d'authentification,
vérifier (E4) une correspondance de l'identificateur (IU) de l'usager et l'identificateur (IEQ) de l'équipement dans le moyen d'authentification (AU), et
, charger (E8, E9) les premières et deuxièmes données personnelles à l'usager (DA, DF) depuis les premier et deuxième moyens de mémoire (MA, MF) dans l'équipement (EQ) sous la commande du moyen d'authentification lorsque l'identificateur d'usager (IU) est en correspondance avec l'identificateur d'équipement (IEQ).

2. Procédé conforme à la revendication 1, selon lequel le premier moyen de mémoire (MA) et le moyen d'authentification (AU) sont inclus dans un premier serveur (SE) relié par un réseau de télécommunications (RP, RR, RTC) au terminal mobile d'usager (T) et à l'équipement électronique (EQ), et le premier serveur après avoir vérifié la correspondance entre les identificateurs, télécharge
(E8) et active (E9) les premières données d'usager (DA) depuis le premier serveur et les deuxièmes données d'usager (DF) depuis le deuxième moyen de mémoire (MF) dans l'équipement à travers le réseau de télécommunications.

3. Procédé conforme à la revendication 2, dans lequel le premier serveur (SE) commande l'activation (E9) des premières et deuxièmes données d'usager (D_{A}, DF) lorsque celles-ci sont déjà mémorisées (E7) dans l'équipement (EQ) après les étapes d'appeler et de vérifier (E1, E4).

4. Procédé conforme à la revendication 1, selon lequel le premier moyen de mémoire (MA) est inclus dans l'équipement (EQ) et le moyen d'authentification (AU) est inclus dans un premier serveur (SE) relié par un réseau de télécommunications (RP, RR, RTC) au terminal mobile d'usager (T), et le premier serveur après avoir vérifié la correspondance entre les identificateurs, active (E9) les premières et deuxièmes données d'usager (DA, DF) dans l'équipement à travers le réseau de télécommunications.

5. Procédé conforme à la revendication 1, selon lequel le premier moyen de mémoire (MA) est inclus dans un premier serveur (SE) relié par un réseau de télécommunications (RP, RR, RTC) au terminal mobile d'usager (T) et le moyen d'authentification (AU) est inclus dans l'équipement (EQ), l'équipement après avoir été appelé par le terminal (T) et avoir vérifié la correspondance entre l'identificateur d'usager (IU) et l'identificateur d'équipement (IEQ) transmis, télécharge et active dans l'équipement (EQ) les premières et deuxièmes données d'usager (DA, DF) lues
respectivement dans le premier serveur (SE) et le deuxième moyen de mémoire (MF).

6. Procédé conforme à la revendication 5, dans lequel l'équipement (EQ) commande l'activation (E9) des premières et deuxièmes données d'usager (DA, DF) lorsque celles-ci sont déjà mémorisées dans l'équipement (EQ) après les étapes d'appeler et de vérifier (E1, E4).

7. Procédé conforme à l'une quelconque des revendications 2 à 6, selon lequel le deuxième moyen de mémoire (MF) est inclus dans le premier serveur (SE).

8. Procédé conforme à l'une quelconque des revendications 2 à 6, selon lequel le deuxième moyen de mémoire (MF) est inclus dans un deuxième serveur (SDᵢ) qui transmet les deuxièmes données d'usager (DF) au premier serveur (SE) afin de les télécharger dans l'équipement (EQ) lorsque l'identificateur d'usager (IU) est en correspondance avec l'identificateur d'équipement (IEQ).

9. Procédé conforme à l'une quelconque des revendications 2 à 6, selon lequel le deuxième moyen de mémoire (MF) est inclus dans le terminal (T) et le premier serveur (SE) télécharge les deuxièmes données d'usager (DF) depuis le terminal afin de les retransmettre à l'équipement (EQ) lorsque l'identificateur d'usager (IU) est en correspondance avec l'identificateur d'équipement (IEQ).

10. Procédé conforme à la revendication 1, selon lequel le premier moyen de mémoire (MA) et le moyen d'authentification (AU) sont inclus dans l'équipement (EQ) relié par au moins une liaison sans fil (IR₁, IR₂, LRP) au terminal mobile d'usager (T), et l'équipement après avoir été appelé par le terminal et avoir vérifié la correspondance entre l'identificateur d'usager (IU) et l'identificateur d'équipement (IEQ) transmis, charge les deuxièmes données d'usager (DF) et active les premières et deuxièmes données d'usager (DA, DF).

11. Procédé conforme à la revendication 10, selon lequel le deuxième moyen de mémoire (MF) est inclus dans l'équipement (EQ).

12. Procédé conforme à la revendication 10, selon lequel le deuxième moyen de mémoire (MF) est inclus dans le terminal (T) et l'équipement (EQ) télécharge les deuxièmes données d'usager (DF) depuis le terminal, puis active les premières et deuxièmes données d'usager (DA, DF) lorsque l'identificateur d'usager (IU) est en correspondance avec l'identificateur d'équipement (IEQ).

13. Procédé conforme à l'une quelconque des revendications 1 à 12, selon lequel les premières données d'usager (DA) désignent au moins une fonction gérée par l'équipement (EQ).

14. Procédé conforme à la revendications 13, selon lequel la fonction est relative à une ouverture de porte.

15. Procédé conforme à l'une quelconque des revendications 1 à 14, selon lequel les deuxièmes données d'usager (DF) contiennent au moins un paramètre d'une fonction gérée par l'équipement électronique (EQ).

## Patentansprüche

1. Verfahren zur Steuerung einer Herunterladung von ersten und zweiten persönlichen Benutzerdaten (DA, DF) durch ein mobiles Funksprech-Benutzerendgerät (T) von einem ersten beziehungsweise einem zweiten Speichermittel (MA, MF) in Richtung einer elektronischen Anordnung (EQ), **dadurch gekennzeichnet, dass** es die folgenden Schritte aufweist:
Anrufen (E1) eines Authentifizierungsmittels (AU) ausgehend von dem Endgerät (T) über eine Funkverbindung (IR₁, IR₂, LRP), um eine Kennung (IU) des Benutzers und eine Kennung (IEQ) der Anordnung (EQ) an das Authentifizierungsmittel zu senden (E2, E3),
Überprüfen (E4) einer Übereinstimmung der Kennung (IU) des Benutzers und der Kennung (IEQ) der Anordnung im Authentifizierungsmittel (AU), und
Herunterladen (E8, E9) der ersten und zweiten persönlichen Benutzerdaten (DA, DF) von dem ersten und dem zweiten Speichermittel (MA, MF) in die Anordnung (EQ) unter der Steuerung des Authentifizierungsmittels, wenn die Benutzerkennung (IU) mit der Anordnungskennung (IEQ) übereinstimmt.

2. Verfahren nach Anspruch 1, wobei das erste Speichermittel (MA) und das Authentifizierungsmittel (AU) in einem ersten Server (SE) enthalten sind, der über ein Telekommunikationsnetz (RP, RR, RTC) mit dem mobilen Benutzerendgerät (T) und mit der elektronischen Anordnung (EQ) verbunden ist, und der erste Server, nachdem er die Übereinstimmung zwischen den Kennungen überprüft hat, die ersten Benutzerdaten (DA) vom ersten Server und die zweiten Benutzerdaten (DF) vom zweiten Speichermittel (MF) über das Telekommunikationsnetz in die Anordnung herunterlädt (E8) und aktiviert (E9).

3. Verfahren nach Anspruch 2, wobei der erste Server (SE) die Aktivierung (E9) der ersten und zweiten Benutzerdaten (DA, DF) steuert, wenn diese nach den Schritten des Anrufens und des Überprüfens (E1, E4) bereits in der Anordnung (EQ) gespeichert (E7) sind.

4. Verfahren nach Anspruch 1, wobei das erste Speichermittel (MA) in der Anordnung (EQ) enthalten ist und das Authentifizierungsmittel (AU) in einem ersten Server (SE) enthalten ist, der über ein Telekommunikationsnetz (RP, RR, RTC) mit dem mobilen Benutzerendgerät (T) verbunden ist, und der erste Server, nachdem er die Übereinstimmung zwischen den Kennungen überprüft hat, die ersten und zweiten Benutzerdaten (DA, DF) in der Anordnung über das Telekommunikationsnetz aktiviert (E9).

5. Verfahren nach Anspruch 1, wobei das erste Speichermittel (MA) in einem ersten Server (SE) enthalten ist, der über ein Telekommunikationsnetz (RP, RR, RTC) mit dem mobilen Benutzerendgerät (T) verbunden ist, und das Authentifizierungsmittel (AU) in der Anordnung (EQ) enthalten ist, wobei die Anordnung, nachdem sie durch das Endgerät (T) angerufen wurde und die Übereinstimmung zwischen der gesendeten Benutzerkennung (IU) und Anordnungskennung (IEQ) überprüft hat, die ersten und zweiten Benutzerdaten (DA, DF), die im ersten Server (SE) bzw. dem zweiten Speichermittel (MF) gelesen wurden, in die Anordnung (EQ) herunterlädt und aktiviert.

6. Verfahren nach Anspruch 5, wobei die Anordnung (EQ) die Aktivierung (E9) der ersten und zweiten Benutzerdaten (DA, DF) steuert, wenn diese nach den Schritten des Anrufens und des Überprüfens (E1, E4) bereits in der Anordnung (EQ) gespeichert sind.

7. Verfahren nach einem der Ansprüche 2 bis 6, wobei das zweite Speichermittel (MF) im ersten Server (SE) enthalten ist.

8. Verfahren nach einem der Ansprüche 2 bis 6, wobei das zweite Speichermittel (MF) in einem zweiten Server (SDᵢ) enthalten ist, der die zweiten Benutzerdaten (DF) an den ersten Server (SE) sendet, um sie in die Anordnung (EQ) herunterzuladen, wenn die Benutzerkennung (IU) mit der Anordnungskennung (IEQ) übereinstimmt.

9. Verfahren nach einem der Ansprüche 2 bis 6, wobei das zweite Speichermittel (MF) in dem Endgerät (T) enthalten ist und der erste Server (SE) die zweiten Benutzerdaten (DF) vom Endgerät herunterlädt, um sie an die Anordnung (EQ) weiterzugeben, wenn die Benutzerkennung (IU) mit der Anordnungskennung (IEQ) übereinstimmt.

10. Verfahren nach Anspruch 1, wobei das erste Speichermittel (MA) und das Authentifizierungsmittel (AU) in der Anordnung (EQ) enthalten sind, die über mindestens eine drahtlose Verbindung (IR₁, IR₂, LRP) mit dem mobilen Benutzerendgerät (T) verbunden ist, und die Anordnung, nachdem sie durch das Endgerät angerufen wurde und die Übereinstimmung zwischen der übertragenen Benutzerkennung (IU) und Anordnungskennung (IEQ) überprüft hat, die zweiten Benutzerdaten (DF) herunterlädt und die ersten und zweiten Benutzerdaten (DA, DF) aktiviert.

11. Verfahren nach Anspruch 10, wobei das zweite Speichermittel (MF) in der Anordnung (EQ) enthalten ist.

12. Verfahren nach Anspruch 10, wobei das zweite Speichermittel (MF) in dem Endgerät (T) enthalten ist und die Anordnung (EQ) die zweiten Benutzerdaten (DF) vom Endgerät herunterlädt, dann die ersten und zweiten Benutzerdaten (DA, DF) aktiviert, wenn die Benutzerkennung (IU) mit der Anordnungskennung (IEQ) übereinstimmt.

13. Verfahren nach einem der Ansprüche 1 bis 12, wobei die ersten Benutzerdaten (DA) mindestens eine Funktion bezeichnen, die durch die Anordnung (EQ) verwaltet wird.

14. Verfahren nach Anspruch 13, wobei die Funktion eine Türöffnung betrifft.

15. Verfahren nach einem der Ansprüche 1 bis 14, wobei die zweiten Benutzerdaten (DF) mindestens einen Parameter einer durch die elektronische Anordnung (EQ) verwalteten Funktion enthalten.

## Claims

1. Method for controlling by a user mobile radiotelephone terminal (T) a loading of first and second data (DA, DF) **personal to** the user respectively from first and second memory means (MA, MF) to an electronic apparatus (EQ), **characterized in that** it comprises the steps of:
calling (E1) through a radio link (IR₁, IR₂, LRP) an authentication means (AU) from the terminal (T) so as to transmit (E2, E3) an identifier (IU) of the user and
an identifier (IEQ) of the apparatus (EQ) to the authentication means,
verifying (E4) a correspondence of the identifier (IU) of the user and the identifier (IEQ) of the apparatus in the authentication means (AU), and
loading (E8, E9) the first and second data personal to the user (DA, DF) from the first and second memory means (MA, MF) in the apparatus (EQ) under the control of the authentication means when the user identifier (IU) is in correspondence with the apparatus identifier (IEQ).

2. Method in accordance with Claim 1, according to which the first memory means (MA) and the authentication means (AU) are included in a first server (SE) linked by a telecommunications network (RP, RR, RTC) to the user mobile terminal (T) and to the electronic apparatus (EQ), and the first server after having verified the correspondence between the identifiers, downloads (E8) and activates (E9) the first user data (DA) from the first server and the second user data (DF) from the second memory means (MF) in the apparatus through the telecommunications network.

3. Method in accordance with Claim 2, in which the first server (SE) controls the activation (E9) of the first and second user data (DA, DF) when the latter are already stored (E7) in the apparatus (EQ) after the steps of calling and of verifying (E1, E4).

4. Method in accordance with Claim 1, according to which the first memory means (MA) is included in the apparatus (EQ) and the authentication means (AU) is included in a first server (SE) linked by a telecommunications network (RP, RR, RTC) to the user mobile terminal (T), and the first server after having verified the correspondence between the identifiers, activates (E9) the first and second user data (DA, DF) in the apparatus through the telecommunications network.

5. Method in accordance with Claim 1, according to which the first memory means (MA) is included in a first server (SE) linked by a telecommunications network (RP, RR, RTC) to the user mobile terminal (T) and the authentication means (AU) is included in the apparatus (EQ), the apparatus after having been called by the terminal (T) and having verified the correspondence between the user identifier (IU) and the apparatus identifier (IEQ) transmitted, downloads and activates in the apparatus (EQ) the first and second user data (DA, DF) read respectively in the first server (SE) and the second memory means (MF).

6. Method in accordance with Claim 5, in which the apparatus (EQ) controls the activation (E9) of the first and second user data (DA, DF) when the latter are already stored in the apparatus (EQ) after the steps of calling and of verifying (E1, E4).

7. Method in accordance with any one of Claims 2 to 6, according to which the second memory means (MF) is included in the first server (SE).

8. Method in accordance with any one of Claims 2 to 6, according to which the second memory means (MF) is included in a second server (SDᵢ) which transmits the second user data (DF) to the first server (SE) so as to download them in the apparatus (EQ) when the user identifier (IU) is in correspondence with the apparatus identifier (IEQ).

9. Method in accordance with any one of Claims 2 to 6, according to which the second memory means (MF) is included in the terminal (T) and the first server (SE) downloads the second user data (DF) from the terminal so as to retransmit them to the apparatus (EQ) when the user identifier (IU) is in correspondence with the apparatus identifier (IEQ).

10. Method in accordance with Claim 1, according to which the first memory means (MA) and the authentication means (AU) are included in the apparatus (EQ) linked by at least one wireless link (IR₁, IR₂, LRP) to the user mobile terminal (T), and the apparatus after having been called by the terminal and having verified the correspondence between the user identifier (IU) and the apparatus identifier (IEQ) transmitted, loads the second user data (DF) and activates the first and second user data (DA, DF).

11. Method in accordance with Claim 10, according to which the second memory means (MF) is included in the apparatus (EQ).

12. Method in accordance with Claim 10, according to which the second memory means (MF) is included in the terminal (T) and the apparatus (EQ) downloads the second user data (DF) from the terminal, and then activates the first and second user data (DA, DF) when the user identifier (IU) is in correspondence with the apparatus identifier (IEQ).

13. Method in accordance with any one of Claims 1 to 12, according to which the first user data (DA) designate at least one function managed by the apparatus (EQ).

14. Method in accordance with Claim 13, according to which the function relates to a door opening.

15. Method in accordance with any one of Claims 1 to 14, according to which the second user data (DF) contain at least one parameter of a function managed by the electronic apparatus (EQ).
